(19) Europäisches Patentamt / European Patent Office / Office européen des brevets

(11) **EP 1 403 658 B1**

(12) **FASCICULE DE BREVET EUROPEEN**

(45) Date de publication et mention
de la délivrance du brevet:
**21.12.2016 Bulletin 2016/51**

(51) Int Cl.:
***G01S 13/34*** *(2006.01)*

(21) Numéro de dépôt: **03102705.5**

(22) Date de dépôt: **04.09.2003**

(54) **Procédé d'élargissement de la distance non ambiguë dans les radars à FSK.**

Verfahren zur Verbreitung des unzweideutigen Abstandes der FSK-Radarsensoren

Method for widening the unambiguous range of FSK radars

(84) Etats contractants désignés:
**AT BE BG CH CY CZ DE DK EE ES FI FR GB GR
HU IE IT LI LU MC NL PT RO SE SI SK TR**

(30) Priorité: **10.09.2002 FR 0211391**

(43) Date de publication de la demande:
**31.03.2004 Bulletin 2004/14**

(73) Titulaire: **Thales
92400 Courbevoie (FR)**

(72) Inventeur: **ARTIS, Jean-Paul
94117 Cedex, ARCUEIL (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**EP-A- 0 849 607    EP-A- 0 863 408
GB-A- 2 172 461    GB-A- 2 249 448
US-A- 4 379 295    US-A- 4 384 291
US-A- 4 443 799    US-A- 6 028 548**

**Description**

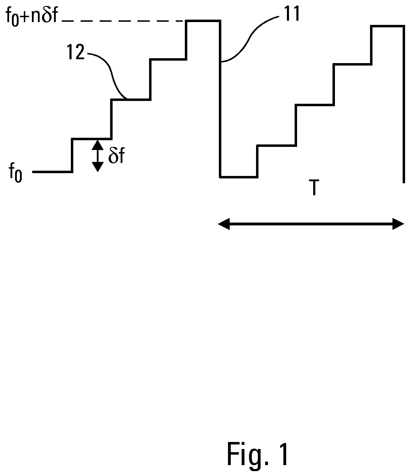

Le principe d'émission des radars dits à FSK est un principe connu. Il consiste, comme le montre la figure 1, à émettre un motif répétitif, constitué d'une onde modulée en fréquence par paliers.

En outre, si T est la période de répétition du motif, on définit de manière connue la distance ambiguë D, par la formule :

$$D = \frac{C.T}{2} \quad (1)$$

De façon générale le bilan de liaison d'un radar est dimensionné de sorte que pour la majorité des types cibles rencontrés, le signal rétrodiffusé par des cibles situées au delà de la distance d'ambiguïté ait une puissance inférieure au seuil de détection du radar. Néanmoins dans certaines circonstances particulières il est possible que le signal rétrodiffusé par des cibles situées au-delà de cette distance dépassent le seuil de détection. C'est par exemple le cas quand le radar se trouve suivant un angle privilégié. On obtient alors en sortie du récepteur du radar, des échos ayant des positions erronées et qu'il faut ensuite éliminer.

Pour limiter ces échos indésirables on est conduit à augmenter la distance d'ambiguïté du radar en augmentant la période T de répétition du motif émis. Augmenter T revient notamment à augmenter le nombre de paliers ou encore à en allonger la durée.

Cette solution n'est toutefois par toujours applicable car le dimensionnement des divers paramètres du radar est généralement le fruit d'un compromis sur la forme de l'onde émise, qui conduit par exemple à limiter le nombre de paliers ou bien encore leur durée.

Il est connu dans l'art antérieur, notamment par les brevets américains US 4 379 295 et US 4 384 291 et la demande de brevet anglais GB 2 249 448 des systèmes de compression d'impulsions.

Il est également connu, par le brevet américain US 6 028 548, un radar anti collision pour véhicule utilisant une forme d'onde FSK aléatoire.

La présente invention a notamment pour but de résoudre le problème posé par le besoin d'augmenter la distance d'ambiguïté sans pour autant allonger la période T. A cet effet l'invention a pour objet un procédé de génération d'une forme d'onde permettant avantageusement de doubler la distance d'ambiguïté d'un radar à FSK sans doubler la durée T du motif émis.

Ce procédé présente l'avantage de générer une onde très proche de la forme d'onde initialement déterminée pour optimiser le fonctionnement du radar.

Avantageusement il est particulièrement adapté aux radars automobiles pour lesquels le temps de propagation de l'onde correspondant au domaine de portée instrumentée du radar est faible devant la durée des paliers de fréquence composant le motif.

D'autres caractéristiques et avantages apparaîtront au travers de la description qui suit. Cette description est réalisée en regard des figures qui sont annexées et qui représentent :

La figure 1, La représentation graphique d'un exemple de forme d'onde émise par un radar à FSK.
La figure 2, La représentation graphique de forme d'onde mise en oeuvre par le procédé selon l'invention.
La figure 3, L'illustration de la représentation spectrale d'un écho correspondant à la forme d'onde selon l'invention, rétrodiffusée par une cible.
La figure 4, Une représentation vectorielle du signal reçu
La figure 5, L'illustration au travers d'un exemple de simulation d'un traitement possible d'ambiguïté distance sur le signal reçu.
La figure 6, La représentation graphique en fonction de la distance de l'écho, du gain obtenu sur la raie utile et du gain obtenu sur la raie image.
La figure 7, L'illustration d'un exemple d'application combinée de critères de levée d'ambiguïté distance et de suppression de la raie image.

La figure 1 donne la représentation graphique d'une forme d'onde FSK standard.
On constate que l'onde émise se présente comme une répétition de motifs 11 de durée T, dont la fréquence varie de $f_0$ à $f_0 + n.\delta f$ suivant n paliers 12 de fréquence, par exemple de durées égales.

Comme il a été dit précédemment, la distance d'ambiguïté est dans ce cas égale à $\frac{C.T}{2}$. Ainsi, par exemple, Un radar à FSK, émettant avec un période T de 12 $\mu$s aura une distance de détection ambiguë de 1.8 Km.

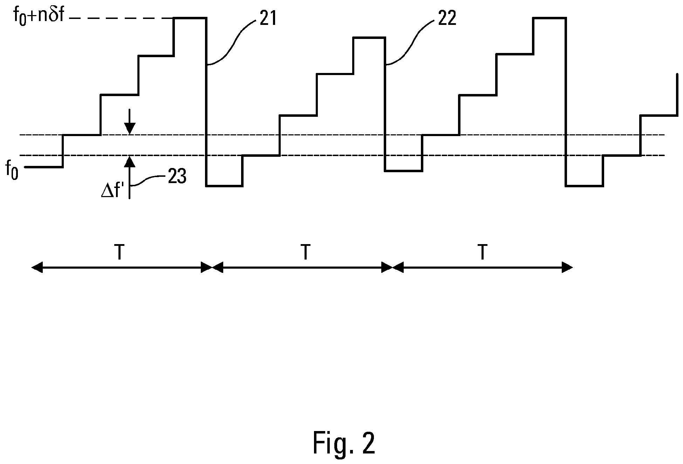

La figure 2 donne la représentation graphique de la forme d'onde mise en oeuvre par le procédé selon l'invention.

On constate que comme dans le cas de la figure 1, l'onde émise se présente comme une succession de motifs. Cependant, dans le cas de l'invention la succession est double. En effet, un motif 21 sur deux est un motif de durée T dont la fréquence varie de $f_0$ à $f_0 + n.\delta f$ suivant n paliers, tandis que le motif suivant 22 est un motif dont la fréquence varie par exemple de $(f_0 - \Delta f')$ à $(f_0-\Delta f') + n.\delta f$. On forme ainsi un motif complexe dont la périodicité est 2.T en décalant un motif par rapport au motif suivant alternativement de $+\Delta f'$ puis de $-\Delta f'$.

L'écart de fréquence $\Delta f'$ 23 est avantageusement choisi de telle sorte qu'il soit suffisamment fort de façon à induire sur l'écho d'une cible située au-delà de la distance d'ambiguïté une rotation de phase suffisante pour pouvoir être détecté comme tel et éliminé par les moyens de traitement du signal qui équipent le radar. De même cet écart est choisi suffisamment faible pour ne pas modifier sensiblement les caractéristiques de détection des échos provenant de cibles non ambiguës en distance et en particulier pour ne pas en modifier le niveau.

A titre d'exemple on peut considérer une forme d'onde comportant des motifs de durée T = 12 μs, composés 5 paliers régulièrement espacés d'environ 160 KHz avec un écart de fréquence $\Delta f'$ d'environ 100 KHz.

L'emploi d'une telle forme d'onde présente notamment pour avantage de doubler la distance d'ambiguïté en considérant la périodicité double créée par l'alternance des motifs à $f_0$ et $f_0+\Delta f'$. Ainsi, lors de sa réception par le radar, un écho lointain sera démodulé avec la fréquence du motif en cours, décalée de $\Delta f'$ par rapport à sa propre fréquence. Cette différence va se traduire au niveau du signal reçu par un déphasage permettant d'identifier ce signal comme provenant d'un écho ambigu en distance et de l'éliminer par traitement.

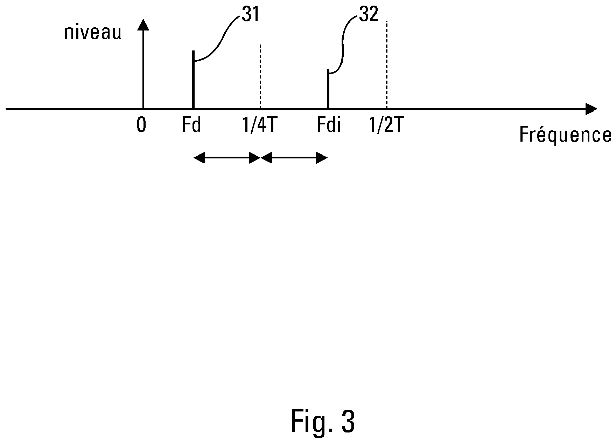

La représentation de la figure 3, permet de visualiser les effets induits sur le spectre d'un écho non ambigu en distance, provenant d'une cible illuminée par la forme d'onde selon l'invention.

On constate qu'en plus de la raie caractéristique de l'écho qui se situe à la fréquence doppler $F_d$ 31 on trouve une raie d'intermodulation 32 de fréquence $f_{di}$. La fréquence $f_{di}$ est située à l'intérieur du domaine fréquentiel compris entre 0 et $^1/_{2T}$ correspondant au domaine des fréquences doppler non ambiguës.

Des calculs menés par ailleurs montrent qu'elle est la fréquence symétrique de la fréquence $F_d$ par rapport à $^1/_{4T}$. On a :

$$f_{di} = \frac{1}{2T} - f_d \qquad (2)$$

Ainsi, la valeur de $F_{di}$ est parfaitement connue.

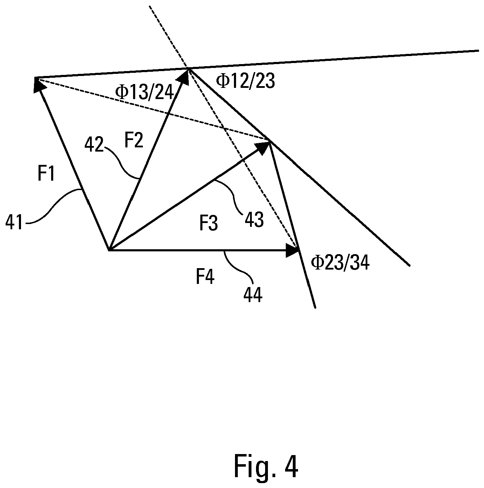

L'utilisation d'une forme d'onde selon l'invention, telle que celle décrite par la figure 2, permet d'allonger la distance d'ambiguïté et de déterminer en fonction de la valeur de la phase du signal reçu, si un écho reçu est bien vu à la bonne distance. Pour lever l'ambiguïté, plusieurs types de traitement connus par ailleurs et non décrits ici sont envisageables. La figure 4 Illustre un exemple possible de traitement permettant de lever l'ambiguïté en distance d'un écho reçu dans le cas d'une émission FSK. Ce procédé est notamment décrit dans le brevet français 96 15740.

La figure 4 est une représentation vectorielle après analyse doppler, du signal reçu pour quatre fréquences correspondant à quatre des n paliers de fréquence composant un motif. Sur la figure, les vecteurs $F_1$ 41 à $F_4$ 44 correspondent ainsi aux représentations vectorielles des signaux résultant de l'analyse des échantillons issus des paliers de fréquence correspondants.

Pour savoir si le signal reçu présente une ambiguïté en distance on peut, s'agissant d'une onde FSK, appliquer par exemple aux vecteurs $F_1$ à $F_4$ des opérateurs d'estimation distance FSK usuels. Ces opérateurs, dans le cas où l'émission se fait par paliers équidistants de $\delta f$ en fréquence, peuvent notamment s'exprimer comme suit :

$$D12/23 = (C/4\pi\delta f) \cdot \phi\,[(F2-F1),(F3-F2)] = C/4\pi\delta f)\,\phi12/23 \qquad (3)$$

$$D13/24 = (C/4\pi\delta f) \cdot \phi\,[(F3-F1),(F4-F2)] = C/4\pi\delta f)\,\phi13/24 \qquad (4)$$

$$D23/34 = (C/4\pi\delta f) \cdot \phi\,[(F3-F2),(F4-F3)] = C/4\pi\delta f)\,\phi23/34 \qquad (5)$$

Où $\phi12/23$, $\phi13/24$ et $\phi23/34$ représentent les rotations de phase correspondant au déplacement de la cible.

Pour une cible située dans le domaine de validité des mesures effectuées, notamment en ce qui concerne la durée du temps de propagation par rapport à celle des paliers de fréquence du motif, ces opérateurs permettent de déterminer la distance de la cible. Le principe de cette détermination est notamment exposé dans le brevet français 96 15740.

Pour déterminer ensuite si la cible est ou non ambiguë on peut par exemple appliquer aux valeurs D12/23, D13/24 et D23/34 calculées, le critère de validité suivant :

$$\text{D12/23 et D13/24 et D23/34} < \text{D0} \qquad (6)$$

$$\text{(D12/23 - D23/34) et (D13/24 - D23/34) et (D12/23 - D13/24)} < \text{D1} \qquad (7)$$

Où les distances $D_0$ et $D_1$ sont choisi en fonction des capacités de détection souhaitées.

Comme cela est notamment mentionné dans le brevet français 97 02547, ce critère de validité permet en particulier de bénéficier d'une réduction du niveau de bruit sur le signal consécutive aux calculs de différences entre canaux.

Le type de traitement des ambiguïtés distance présenté à titre d'exemple dans ce qui précède est applicable à tous les signaux obtenus par émission FSK. Il s'applique en particulier avantageusement à la forme d'onde selon l'invention.

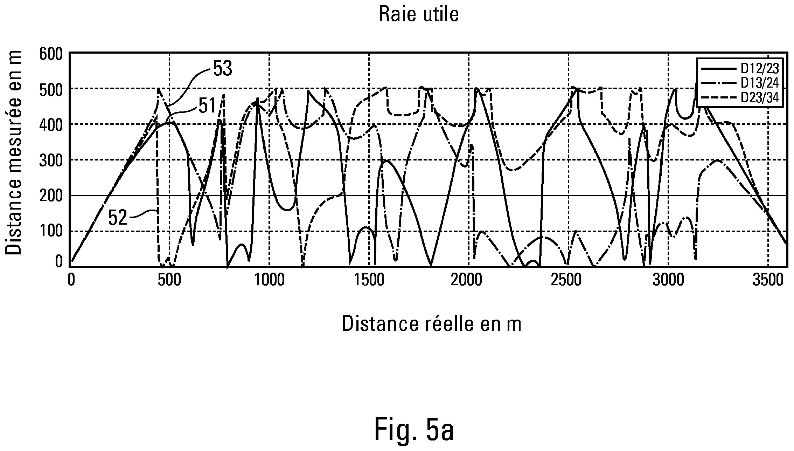

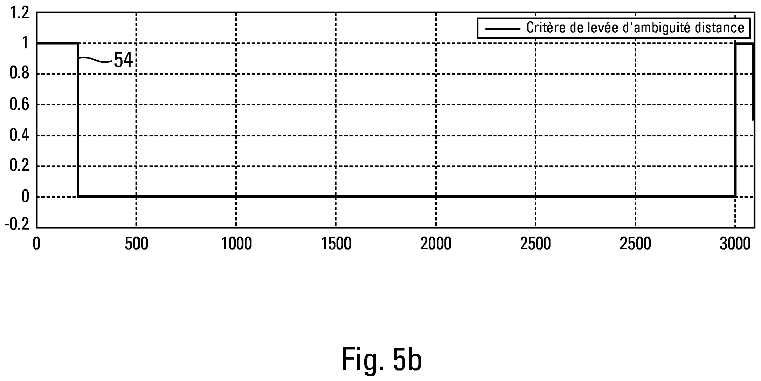

Au travers de graphiques 5a et 5b la figure 5 illustre au travers d'un exemple de simulation, l'application d'un traitement d'ambiguïté distance tel que décrit précédemment au signal reçu sur une portée de 3.5 Km. Dans cet exemple on a choisi $D_0$ = 200 m, $D_1$ = 30 m et une forme d'onde selon l'invention, pour laquelle Δf' = 75 KHz.

Le graphique 5a présente les courbes 51, 52 et 53 de variation de la distance mesurée par les différents opérateurs distance FSK D12/23 et D13/24 et D23/34, en fonction de la distance réelle de l'écho reçu par le radar. On constate que pour une distance comprise entre 0 m et environ 500 m les trois opérateurs donnent une distance mesurée identique. Ensuite, au delà de 500 m et jusqu'environ 3500 m, il n'est plus possible d'obtenir une identité des trois valeurs. Le critère de validité va donc permettre d'éliminer par traitement tout écho dont la distance réelle sera supérieure à 200 m et inférieure à 3500 m. C'est ce que traduit le graphique 5b qui montre la courbe 54 correspondant à la valeur de validité accordée, en fonction de la distance réelle de l'écho reçu, à la valeur mesurée. On constate qu'entre 0 et 200 m le critère de validité conduit à attribuer la valeur 1 à la non-ambiguïté de la distance mesurée, tandis qu'au-delà et jusqu'environ 3500 m on lui attribue la valeur 0. Au-delà de 3500 m en revanche, la levée d'ambiguïté à l'aide de ce critère redevient impossible.

Au travers de la figure 5, on peut avantageusement constater que la validité des opérateurs distance FSK n'est pas affectée par l'emploi d'une forme d'onde selon l'invention. D'autre part, on peut également constater que l'emploi d'une forme d'onde selon l'invention permet bien de quasiment doubler la distance d'ambiguïté qui avec une forme d'onde FSK classique aurait été de 1800 m.

L'illustration de la figure 5 montre donc bien que, grâce à l'emploi de la forme d'onde décrite dans ce qui précède, et en utilisant des traitements classiques de levée des ambiguïtés distance, employés pour traiter les signaux issus d'une onde FSK, Le procédé selon l'invention permet donc avantageusement de doubler la distance d'ambiguïté sans changer la période T de répétition des motifs et donc sans changer les paramètres de détection souhaités.

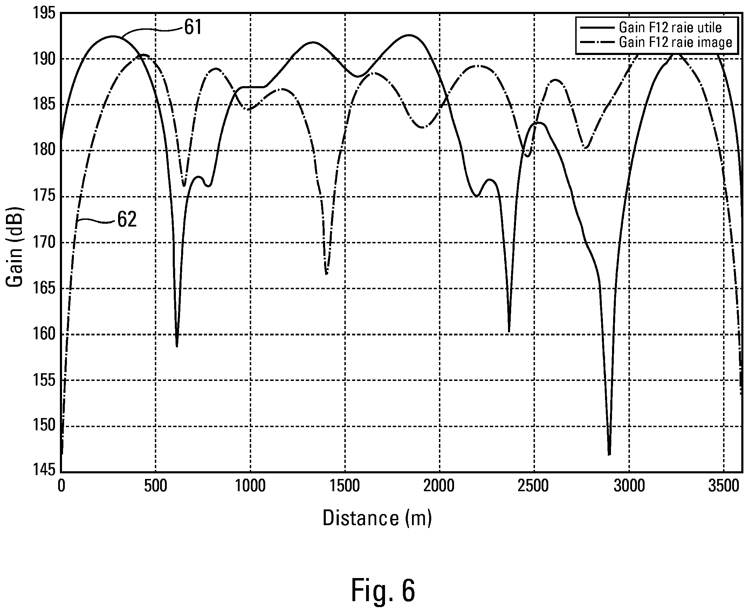

Sur le graphique de la figure 6 sont représentées les courbe 61 et 62 donnant respectivement pour une distance donnée et pour l'exemple pris dans la figure 5, les gains de traitement obtenus sur le signal réel reçu (raie utile) et sur le signal issu de l'écart de fréquence Δf' séparant deux motifs consécutifs de la forme d'onde selon l'invention (raie image). On constate sur cette figure que pour uns distance inférieure à environ 500 m le gain sur la raie utile est constamment supérieur au gain sur la raie image alors qu'ensuite cela peut être le contraire. Cette constatation peut être mise à profit pour déterminer de manière systématique si le signal analysé est un écho non ambigu réel ou bien le signal image qui lui est attaché. Pour ce faire, une solution consiste par exemple à identifier les signaux provenant d'échos non ambigus dont les fréquences doppler forment des paires $(F_d, F_{di})$ et à La comparer la différence des gains obtenus sur chacun des signaux à une valeur utilisée comme critère. Le principe est alors par exemple le suivant :

- On choisit une raie située à la fréquence $F_u$ et on relève le gain $G_u$ correspondant.
- On identifie la raie supposée être la raie image : celle-ci est située à $1/2T - F_u$. Soit $F_i$ sa fréquence et $G_i$ son gain.
- On applique le critère de gain : $G_u - G_i > G_0$, les gains étant exprimés en dB.

Deux cas sont alors à envisager

- $G_u - Gi > Go$ est vrai et alors $F_u$ est bien le signal utile correspondant à un écho réel non ambigu en distance. $F_i$ correspond bien alors au signal image à éliminer.
- $G_u - Gi > Go$ est faux et c'est alors $F_u$ qui représente le signal image à éliminer, le signal $F_i$ correspondant à l'écho réel non ambigu en distance.

On peut ainsi dans la zone sans ambiguïté distance, éliminer de manière simple les échos images indésirables.

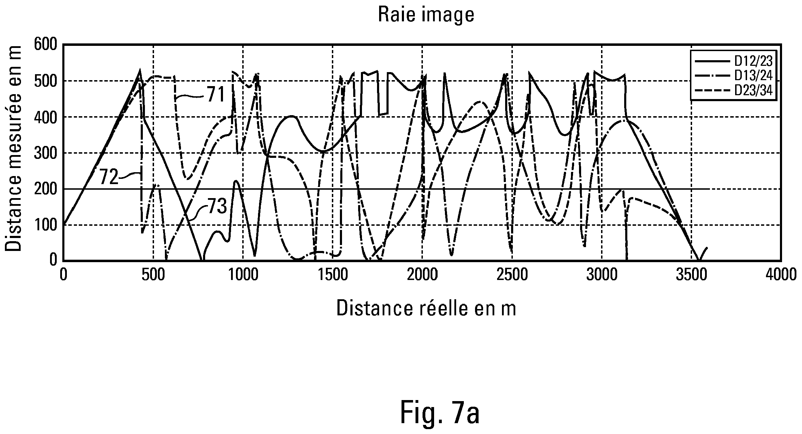

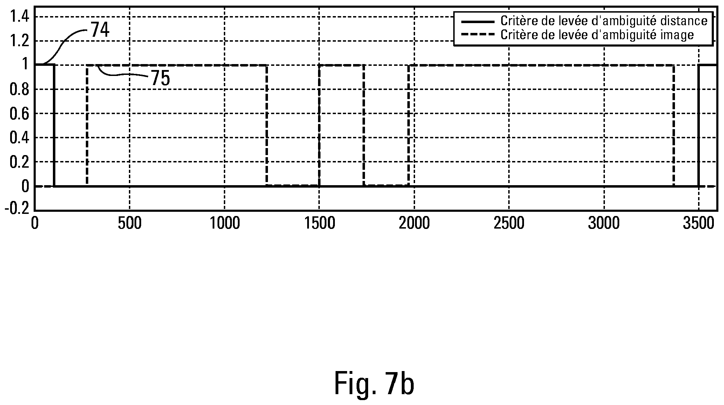

La figure 7 illustre au travers des graphiques 7a et 7b un exemple d'application combinée de critères de levée d'ambiguïté distance et de suppression de la raie image. Les critères sont ici appliqués à une simulation du signal image avec, comme dans le cas de la figure 5, $D_0$ = 200 m, $D_1$ = 30 m et une forme d'onde selon l'invention, pour laquelle $\Delta f'$ = 75 KHz.

Le graphique 7a représente à la manière du graphique 5a les courbes 71, 72 et 73 de variation de la distance mesurée par les différents opérateurs distance FSK usuels D12/23 et D13/24 et D23/34 appliqués aux signaux images, en fonction de la distance réelle de l'écho reçu par le radar. Comme sur le graphique 5a, on constate que pour une distance comprise entre 0 m et environ 500 m les trois opérateurs donnent une distance mesurée identique. Ensuite, au-delà de 500 m et jusqu'environ 3500 m, il n'est plus possible d'obtenir une identité des trois valeurs.

Le graphique 7b quant à lui qui représente comme le graphique 5b la courbe 74 correspondant à la valeur de validité accordée à la non-ambiguïté du signal présent, en fonction de la distance réelle de l'écho reçu, à la valeur mesurée. Cependant il représente également la courbe 75 correspondant à la valeur de validité accordée à la réalité du même signal en fonction de la distance.

En étudiant le graphique 7b, on peut ainsi constater qu'un traitement combinant les effets des deux critères permet avantageusement de déterminer les signaux qui correspondent à des échos provenant d'objets situés dans la zone non ambiguë en distance. Le même traitement peut donc également éliminer les autres signaux.

Le procédé décrit dans ce document s'applique avantageusement aux radars à FSK et en particulier aux radars équipant des véhicules automobiles notamment dans le domaine de l'anticollision.

## Revendications

**1.** Procédé d'extension du domaine d'ambiguïté en distance d'un radar à FSK, ledit procédé comprenant:

une étape d'émission d'une forme d'onde comportant des motifs composés eux-mêmes d'au moins quatre paliers de fréquence;
une étape de réception des échos rétrodiffusés par au moins une cible;
une étape d'élimination des échos ambiguës en distance;
le procédé étant **caractérisé en ce que**:

la fréquence des paliers composant les motifs de durée T varie alternativement de $f_0$ à $f_0+n\delta f$ et de $(f_0+\Delta f')$ à $(f_0+\Delta f')+n\delta f$ où n représente le nombre de palier de fréquence, $\delta f$ la variation de fréquence entre deux paliers consécutifs d'un même motif et $\Delta f'$ l'écart de fréquence entre deux motifs consécutifs, formant ainsi un motif complexe dont la périodicité est 2T en décalant un motif par rapport au motif suivant alternativement de $+\Delta f'$ puis de $-\Delta f'$,

## Patentansprüche

**1.** Verfahren zur Erweiterung des Entfernungsmehrdeutigkeitsbereichs eines FSK-Radars, wobei das Verfahren umfasst:

einen Schritt zur Aussendung einer Wellenform, die Motive aufweist, die ihrerseits aus zumindest vier Frequenzstufen bestehen;
einen Schritt zum Empfang der Echos, die von zumindest einem Ziel rückgestreut werden;
einen Schritt zur Beseitigung der hinsichtlich der Entfernung mehrdeutigen Echos;
wobei das Verfahren **dadurch gekennzeichnet ist, dass**:

die Frequenz der Stufen, die die Motive der Dauer T bilden, abwechselnd von $f_0$ bis $f_0+n\delta f$ und von $(f_0+\Delta f')$ bis $(f_0+\Delta f')+n\delta f$ variiert, worin n die Frequenzstufenzahl, $\delta f$ die Frequenzvariation zwischen zwei aufeinanderfolgenden Stufen mit gleichem Motiv und $\Delta f'$ den Frequenzabstand zwischen zwei aufeinanderfolgenden Motiven darstellt, wobei auf diese Weise ein komplexes Motiv gebildet wird, dessen Periodizität 2T ist, wobei ein Motiv in Bezug auf das folgende Motiv abwechselnd um $+\Delta f'$, dann um $\Delta f'$ verschoben wird.

**Claims**

1. A method of increasing the ambiguity range of an FSK radar, said process comprising:

a step of emitting a waveform comprising patterns themselves formed by at least four frequency plateaus;
a step of receiving echoes backscattered by at least one target;
a step of eliminating echoes that are ambiguous in distance;
the method being **characterised in that**:

the frequency of the plateaus forming the patterns of duration T varies alternately from $f_0$ to $f_0+n\delta f$ and from $(f_0+\Delta f')$ to $(f_0+\Delta f')+n\delta f$ where n represents the frequency plateau number, $\delta f$ the variation in frequency between two consecutive plateaus of the same pattern and $\Delta f'$ the frequency deviation between two consecutive patterns, thus forming a complex pattern the periodicity of which is 2T by shifting a pattern relative to the following pattern alternately by $+\Delta f'$ then by $-\Delta f'$.

Fig. 1

Fig. 2

niveau

31

32

0    Fd    1/4T    Fdi    1/2T

Fréquence

Fig. 3

Fig. 4

Fig. 5a

EP 1 403 658 B1

Fig. 5b

Fig. 6

EP 1 403 658 B1

Fig. 7a

Fig. 7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4379295 A
- US 4384291 A
- GB 2249448 A

- US 6028548 A
- FR 9615740
- FR 9702547